# EUROPÄISCHE PATENTSCHRIFT

(11) **EP 3 096 861 B1**
(45) Veröffentlichungstag und Bekanntmachung des Hinweises auf die Patenterteilung: **15.07.2020**
(21) Anmeldenummer: 15703238.4
(22) Anmeldetag: 22.01.2015
(51) Int. Cl.: B01D 35/30, B01D 27/08

(54) **WECHSELFILTER EINER FILTERVORRICHTUNG UND FILTERVORRICHTUNG**
REPLACEABLE FILTER OF A FILTER DEVICE, AND FILTER DEVICE
FILTRE REMPLAÇABLE D'UN DISPOSITIF DE FILTRATION ET DISPOSITIF DE FILTRATION

(30) Priorität: 23.01.2014 DE 102014000717; 20.02.2014 DE 102014002239; 12.01.2015 DE 102015000069
(43) Veröffentlichungstag der Anmeldung: 30.11.2016
(73) Patentinhaber: Mann+Hummel GmbH, 71636 Ludwigsburg (DE)
(72) Erfinder: PFLÜGER, Frank, 74343 Sachsenheim (DE); RÖSGEN, André, 73630 Remshalden (DE); THALMANN, Christian, 67346 Speyer (DE); ROLLE, Arndt-Udo, 70193 Stuttgart (DE)
(74) Vertreter: Seyboth, Matthias
(86) Internationale Anmeldenummer: PCT/EP2015/051240
(87) Internationale Veröffentlichungsnummer: WO 2015/110524

(56) Entgegenhaltungen:
- WO-A1-95/11072
- WO-A1-2015/004106
- US-A- 6 096 208

## Beschreibung

### Technisches Gebiet

Die Erfindung betrifft einen Wechselfilter, insbesondere Spin-On Filter, einer Filtervorrichtung für Fluid, insbesondere Flüssigkeit, insbesondere Öl oder Kraftstoff, insbesondere einer Brennkraftmaschine, insbesondere eines Kraftfahrzeugs.

Ferner betrifft die Erfindung eine Filtervorrichtung für Fluid, insbesondere Flüssigkeit, insbesondere Öl oder Kraftstoff, insbesondere einer Brennkraftmaschine, insbesondere eines Kraftfahrzeugs, mit wenigstens einem Wechselfilter, insbesondere Spin-On Filter.

### Stand der Technik

Aus der EP 0 830 885 A1 ist eine Filtervorrichtung mit einem Filterkopf und einer Filterpatrone bekannt. Die Filterpatrone ist an dem Filterkopf befestigt. Der Filterkopf umfasst eine Mehrzahl von nach außen gerichteten ansteigenden Vorsprüngen, welche eine erste Komponente einer bajonettartigen Verbindung bilden. Die ansteigenden Vorsprünge sind zusammenwirkend mit ähnlichen Vorsprüngen der Filterpatrone zum Befestigen der Filterpatrone an dem Filterkopf. Zwischen dem Filterkopf und der Filterpatrone ist ein Dichtungsring angeordnet.

Aus der Patentschrift US 6,096,208 A ist eine Dichtanordnung für Wechselfilter bekannt, wobei eine Dichtung zwischen einem filterkopfseitigen Abschnitt und dem Wechselfilter verpresst wird. Am Wechselfilter ist eine nach radial außen und oben offene Dichtungsnut angeordnet, in welche ein kopfseitiger Abschnitt mit einer schrägen Anlagefläche einragt, um die eingelegte Dichtung zu verpressen.

In WO 2015/004106 A1 ist ein Wechselfilter beschrieben, welcher stirnseitig eine umlaufende Außendichtung zur Anlage an eine filterkopfseitige radial nach innen gerichtete Dichtfläche aufweist. Die Außendichtung ist in einer nach radial außen hin offenen Dichtungsaufnahme angeordnet.

Der Erfindung liegt die Aufgabe zugrunde, einen Wechselfilter und eine Filtervorrichtung der eingangs benannten Art zu gestalten, bei dem/der eine Realisierung einer Verbindung zwischen dem Wechselfilter und einem Filterkopf, insbesondere eine Realisierung einer Dichtung am Wechselfilter, vereinfacht und/oder verbessert werden kann. Insbesondere soll eine Dichtheit der montierten Filtervorrichtung zur Umgebung hin verbessert werden.

### Offenbarung der Erfindung

Diese Aufgabe wird erfindungsgemäß durch einen Wechselfilter nach Anspruch 1 gelöst. Der Wechselfilter weist auf:
- einen Gehäusetopf, in welchem wenigstens ein Filterelement angeordnet ist,
- wenigstens ein stirnseitig des Gehäusetopfs angeordnetes filterseitiges Verbindungsteil einer Verbindungseinrichtung zum lösbaren Verbinden des Wechselfilters mit einem Filterkopf der Filtervorrichtung mittels einer Steck- und/oder Drehbewegung bzgl. einer Verbindungsachse des Wechselfilters,
- wenigstens eine stirnseitig des Gehäusetopfs angeordnete Öffnung, insbesondere eine mittige Zentralöffnung und/oder wenigstens eine gegenüber der Zentralöffnung und/oder gegenüber der Verbindungsachse nach radial außen versetzte Fluidöffnung,
- ein mit dem stirnseitigen Rand des Gehäusetopfs mittels einem Formbördel verbundenes Blechumformteil, insbesondere einen insbesondere einteilig hergestellten Blechring, mit wenigstens einer eingeformten, bzgl. der Verbindungsachse umfangsmäßigen, insbesondere koaxialen, in radialer Richtung offenen Dichtungsaufnahmenut zur Aufnahme wenigstens einer Dichtung, insbesondere einer Außendichtung,
wobei wenigstens eine Dichtungsaufnahmenut wenigstens eine Öffnung, ggf. die Zentralöffnung und/oder die wenigstens eine Fluidöffnung, bzgl. der Verbindungsachse radial außen umläuft, und wobei in wenigstens einer Dichtungsaufnahmenut wenigstens eine Dichtung angeordnet ist oder werden kann, die wenigstens eine bzgl. der Verbindungsachse radial und/oder axial gerichtete Dichtungsfläche zur Anlage an wenigstens einer filterkopfseitigen bzgl. der Verbindungsachse radial und/ oder axial gerichteten Dichtfläche aufweist, um bei an dem Filterkopf montiertem Wechselfilter wenigstens einen zwischen dem Wechselfilter und dem Filterkopf gebildeten Fluidraum zur Umgebung hin abzudichten.

Bei dem Wechselfilter ist wenigstens ein Filterelement in dem Gehäusetopf des Filtergehäuses angeordnet. Der Wechselfilter wird komplett mit dem Filtergehäuse und dem darin enthaltenen wenigstens einen Filterelement ausgetauscht. Derartige Wechselfilter können als Spin-On Filter, Aufdrehfilter, insbesondere Anschraubfilter, ausgestaltet werden.

Vorteilhafterweise kann das wenigstens eine Filterelement fest in dem Filtergehäuse angeordnet sein. Alternativ kann wenigstens ein Filterelement austauschbar in dem Filtergehäuse angeordnet sein.

Der Wechselfilter kann mit der Verbindungseinrichtung einfach am Filterkopf lösbar befestigt werden.

Erfindungsgemäß weist das Blechumformteil wenigstens eine Dichtungsaufnahmenut zur Aufnahme von wenigstens einer Dichtung, insbesondere eine zur Umgebung hin abdichtenden Außendichtung, auf. Die wenigstens eine Dichtung wird in der wenigstens einen Dichtungsaufnahmenut des Blechumformteils aufgenommen. Das Blechumformteil seinerseits ist mittels dem Formbördel mit dem stirnseitigen Rand des Gehäusetopfs verbunden. Auf diese Weise kann die wenigstens eine Dichtung verliersicher auf der Seite des Wechselfilters befestigt sein oder werden.

Vorteilhafterweise kann die wenigstens eine Dichtungsaufnahmenut und die entsprechende Dichtung in der Nähe der Umfangswand, insbesondere der Außenwand, des Gehäusetopfs angeordnet werden. Auf diese Weise können die Querschnitte von Bereichen radial innerhalb der Dichtung, die von dem zu reinigende Fluid durchströmt werden können, vergrößert werden.

Wenigstens eine Dichtung kann vorteilhafterweise zwischen dem Filterkopf und dem Wechselfilter bzgl. der Verbindungsachse radial und/oder axial wirkend dichten. Mit einer radial wirkenden Dichtung können die Strömungsquerschnitte radial innerhalb der Dichtung weiter vergrößert werden. Eine radial wirkende Dichtung kann darüber hinaus in axialer Richtung lagetolerant angeordnet werden. Auf diese Weise können insbesondere betriebsbedingte axiale Lagetoleranzen zwischen der wenigstens einen radial wirkenden Dichtung und der entsprechenden Dichtfläche besser kompensiert werden.

Betriebsbedingte Lagetoleranzen können insbesondere durch Schwingungen und/oder Druckpulsationen während des Betriebs hervorgerufen werden.

Vorteilhafterweise kann wenigstens eine Dichtung bzgl. der Verbindungsachse ausschließlich in radialer Richtung abdichten. Auf diese Weise kann eine etwaige Kompression der wenigstens einen Dichtung im Wesentlichen unabhängig von einem Schließgrad der Verbindungseinrichtung sein. Eine mechanische Belastung auf die Dichtung kann so verringert werden.

Durch Verwendung des Blechumformteils mit wenigstens einer Dichtung kann der freie Querschnitt für eine Fluidströmung insbesondere im Bereich des Fluidraums weniger eingeschränkt werden als bei herkömmlichen Wechselfiltern. Auf diese Weise können etwaige Druckverluste zwischen der Rohfluidseite und der Reinfluidseite verringert werden. Der erfindungsgemäße Wechselfilter kann insbesondere bei Filtervorrichtungen, insbesondere Vorfiltern, eingesetzt werden, bei denen eine Saughöhe von Fluidpumpen begrenzt sein kann und/oder Ausgasungen und im Extremfall auch Kavitation auftreten können. Insbesondere bei derartigen Filtervorrichtungen kann mit dem erfindungsgemäßen Wechselfilter ein Druckverlust zwischen der Rohfluidseite und der Reinfluidseite verringert werden.

Die Ausführung der wenigstens einen Dichtungsaufnahmenut erlaubt eine große Gestaltungsfreiheit in Bezug auf die verwendete wenigstens eine Dichtung. So kann insbesondere in Hinblick auf die Wartungsfreundlichkeit oder Servicefähigkeit eine entsprechende Form der wenigstens einen Dichtungsaufnahmenut und/oder ein entsprechend geeigneter Dichtungsraum gewählt werden.

Die wenigstens eine Dichtung kann vorteilhafterweise wenigstens einen Dichtring, insbesondere eine O-Ring-Dichtung, aufweisen oder ein derartiger sein. Alternativ oder zusätzlich kann die wenigstens eine Dichtung einen andersförmigen Dichtring, insbesondere mit einem eckigen und/oder flachen und/oder hohen Profil, aufweisen oder sein. Wenigstens eine Dichtung kann auch als Flach(ring)-dichtung ausgestaltet sein. Eine O-Ring-Dichtung hat den Vorteil, dass sie bei einer Steckbewegung in Richtung der Verbindungsachse einfach an einer entsprechenden radial inneren und/oder radial äußeren Dichtfläche entlanggleiten kann. Mit der O-Ring-Dichtung kann die radiale Dichtwirkung besser definiert und/oder eingestellt werden als mit einer Flach(ring)dichtung.

Vorteilhafterweise kann wenigstens eine Dichtung wenigstens teilweise elastisch sein. Auf diese Weise kann die Dichtfunktion verbessert werden. Die Dichtung kann so darüber hinaus einen Ausgleich von insbesondere herstellungsbedingten und/oder betriebsbedingten Toleranzen und/oder zu einer Dämpfung von betriebsbedingten Schwingungen beitragen.

Vorteilhafterweise kann wenigstens eine Dichtung über wenigstens ein geeignetes Haltemittel, insbesondere wenigstens eine Haltenase, verfügen, mit dem die Dichtung in der wenigstens einen Dichtungsaufnahmenut gehalten werden kann.

Wenigstens eine Dichtung kann vorteilhafterweise bzgl. der Verbindungsachse radial außen an einer entsprechenden Fläche, insbesondere einem Boden, der entsprechenden wenigstens einen Dichtungsaufnahmenut anliegen. Alternativ kann sie auch radial innen an einer entsprechenden Fläche der Dichtungsaufnahmenut anliegen.

Ein Boden der wenigstens einen Dichtungsaufnahmenut kann vorteilhafterweise als radial wirkendes Gegenlager für die wenigstens eine Dichtung dienen, an dem sich die Dichtung abstützen kann.

Das Blechumformteil kann vorteilhafterweise nach einem Tiefziehverfahren und/oder Hydroform-Verfahren oder ähnlichen Verfahren und/oder einem Kaltumformungsverfahren aus Blech geformt werden. Auf diese Weise kann das Blechumformteil mit einem Innendurchmesser realisiert werden, der mit anderen Herstellungsverfahren vergleichbar gar nicht oder zumindest deutlich aufwändiger realisiert werden kann. So können auch radial innen komplexe Verformungen, insbesondere nach radial innen offene Dichtungsaufnahmenuten mit den eingangs genannten Verfahren realisiert werden. Das Blechumformteil kann so auch aus einem Stück, also einteilig, mit komplexen Konturen realisiert werden. Das Blechumformteil muss gemäß der Erfindung nicht aus mehreren Teilen zusammengesetzt, insbesondere geschweißt oder gelötet, werden, wie dies bei ansonsten in Verbindung mit Wechselfiltern verwendeten Herstellungsverfahren zur Realisierung von komplexen Konturen, insbesondere Hinterschneidungen, erforderlich ist.

Das Blechumformteil kann vorteilhafterweise durch ein Folgeverbundwerkzeug nach dem so genannten Hydroform-Verfahren hergestellt werden. So kann das Blechumformteil mit relativ hoher Komplexität aufgrund seiner Abmessung in einem relativ kleinen Werkzeug hergestellt werden.

Im Allgemeinen definiert man Tiefziehen als nahtloses und spanloses Umformen von Metall. Tiefziehteile werden hergestellt, indem ein zugeschnittenes Blech durch Druck und den Einsatz eines Formstempels in die gewünschte Form gebracht wird.

Es kann ein Tiefziehverfahren angewendet werden, dem Hydroformen oder Innenhochdruckumformung zugrunde liegt. Auf diese Weise kann ein zylindrisches Teil, insbesondere metallisches Rohr, in einem geschlossenen Formwerkzeug mittels Innendruck umgeformt werden. Im Formwerkzeug, was ebenso als Dichtvorrichtung dient, kann ein Innendruck von bis zu 3000 bar und mehr aufgebaut werden. Dieser Innendruck presst das umzuformende zylindrische Teil, insbesondere Rundteil, an die Wandung des Formwerkzeugs und bildet damit die entsprechenden Formen ab. Somit ist es auch möglich, Hinterschneidungen, insbesondere radial offene Dichtungsaufnahmenuten, in der Serienproduktion zu realisieren.

Das wenigstens eine filterseitige Verbindungsteil, insbesondere mit einem Gewinde und/oder einem Verbindungselement einer bajonettverschlussartigen Verbindung, ist in Verbindung mit einem separaten Deckelbauteil, insbesondere einem Gehäusedeckel, realisiert. Vorzugsweise handelt es sich im Falle der Variante mit Gewinde bei dem Gewinde um ein Schraubengewinde, insbesondere ein eingängiges Schraubengewinde.

Das Deckelbauteil ist ringförmig. Das Deckelbauteil weist einen Ringscheibenabschnitt auf. Das wenigstens eine filterseitige Verbindungsteil ist einstückig mit dem Ringscheibenabschnitt verbunden.

Das Deckelbauteil kann vorteilhafterweise wenigstens eine stirnseitige Öffnung, insbesondere eine Durchstecköffnung für einen Anschlusszylinder, aufweisen. Der Anschlusszylinder kann vorteilhafterweise eine mittige Zentralöffnung und/oder wenigstens eine nach radial außen versetzte Fluidöffnung wenigstens mit realisieren. Das wenigstens eine filterseitige Verbindungsteil, insbesondere das Deckelbauteil, kann vorteilhafterweise insbesondere aus Kunststoff geformt, insbesondere (spritz)gegossen, sein.

Das Deckelbauteil ist zum Abschließen, insbesondere zum wenigstens teilweisen Verschließen des Gehäuses des Wechselfilters ausgebildet.

Das filterseitige Verbindungsteil ist einstückig mit dem Deckelbauteil verbunden. Auf diese Weise kann ein Aufwand an Bauteilen verringert werden.

Mit dem Blechumformteil kann sowohl das separate Deckelbauteil als auch wenigstens eine Dichtung an dem Gehäusetopf gehalten werden.

Das wenigstens eine Blechumformteil und wenigstens eine filterseitige Verbindungsteil können innerhalb eines vorgebbaren Spiels relativ zueinander beweglich sein. Auf diese Weise können bauteilbedingte und/oder montagebedingte und/oder betriebsbedingte Lagetoleranzen besser ausgeglichen werden.

Ein Formbördel, insbesondere eine Umbördelung, kann nach einem Umform- und Verbindungsverfahren realisiert werden, bei dem die Ränder der zu verbindenden zylindrischen Teile, insbesondere des Blechumformteils und des Randes des Gehäusetopfs, aufgebogen werden. Dabei kann das Material gestaucht werden. Die Randbereiche der zu verbindenden Teile werden umeinander herum gebogen, insbesondere gefalzt. Auf diese Weise kann eine dichte Verbindung zwischen den Teilen realisiert werden. Vorteilhafterweise können die zu verbindenden Teile bzgl. der Verbindungsachse nach radial außen umeinander gebogen werden. Alternativ können Sie auch nach radial innen gebogen werden. Es können auch Kombinationen von Biegungen nach radial außen und radial innen vorgenommen werden.

Zwischen den Randbereichen der zu verbördelnden Teile kann zusätzlich wenigstens ein Dichtungsmittel oder Dichtungsmaterial vor, während oder nach dem Umformprozess angeordnet werden. So kann die Dichtheit der Bördelverbindung weiter verbessert werden.

Durch den Formbördel kann eine stabile Verbindung zwischen der wenigstens einen Dichtungsaufnahmenut - und damit der wenigstens einen Dichtung - und dem Anschlusskörper realisiert werden.

Mittels dem Formbördel kann das Blechumformteil einfach auch mit gängigen Bauteilen, insbesondere Gehäusetöpfen und/oder filterseitigen Verbindungsteilen und/oder Deckelbauteilen, insbesondere Gehäusedeckel, kombiniert werden. Eine derartige Kombination kann einfach umgesetzt werden.

Vorteilhafterweise kann die Filtervorrichtung, insbesondere der Wechselfilter, derart gestaltet sein, dass das ungefilterte Fluid an einer Stirnseite zugeführt und das gefilterte Fluid an derselben Stirnseite abgeführt wird. Vorteilhafterweise können wenigstens eine Zuführung, insbesondere ein Einlass, und wenigstens eine Abführung, insbesondere wenigstens ein Auslass, an derselben Stirnseite des Wechselfilters angeordnet sein.

Vor diesem Hintergrund kann eine mittige Zentralöffnung vorteilhafterweise eine Fluidauslassöffnung sein, durch die gereinigtes Fluid aus dem Wechselfilter heraus gelangen kann. Wenigstens eine gegenüber der mittigen Zentralöffnung und/oder gegenüber der Verbindungsachse nach radial außen versetzte Fluidöffnung kann entsprechend eine Fluideinlassöffnung sein, durch die zu reinigendes Fluid in den Wechselfilter hinein gelangen kann. Alternativ kann die mittige Zentralöffnung eine Fluideinlassöffnung sein, und die wenigstens eine versetzte Fluidöffnung kann eine Fluidauslassöffnung sein.

Alternativ kann die Zentralöffnung so ausgestaltet sein, dass sowohl das Rohfluid als auch das Reinfluid über sie in den Wechselfilter bzw. aus dem Wechselfilter herausströmen kann.

Vorteilhafterweise kann wenigstens eine Dichtungsaufnahmenut, insbesondere wenigstens eine Dichtung, auf der dem Topfboden des Gehäusetopfs axial zugewandten Seite des Formbördels angeordnet sein. Auf diese Weise kann die wenigstens eine Dichtung geschützt innerhalb des Gehäusetopfs angeordnet sein. Ferner kann so ein axialer Bauraum des Wechselfilters verringert werden.

Vorteilhafterweise kann auf Seiten des Filterkopfs wenigstens eine entsprechende kopfseitige Dichtfläche angeordnet sein, mit der wenigstens eine Dichtung, insbesondere Außendichtung, dichtend zusammenwirken kann. Die wenigstens eine Dichtfläche kann sich dabei radial außerhalb, innerhalb und/oder radial auf der gleichen Breite der wenigstens einen Dichtung befinden.

Vorteilhafterweise kann wenigstens eine kopfseitige Dichtfläche in Verbindung mit wenigstens einem kopfseitigen Verbindungsteil realisiert sein. Vorteilhafterweise kann wenigstens eine kopfseitige Dichtfläche an einer radial äußeren und/oder radial inneren Umfangsseite und/oder einer Stirnseite eines Hohlzylinderabschnitts realisiert sein.

Vorteilhafterweise kann wenigstens ein kopfseitiges Verbindungsteil an einer radial inneren oder radial äußeren Umfangsseite eines Hohlzylinderabschnitts wenigstens ein Verbindungselement, insbesondere ein Innengewinde/Außengewinde und/oder ein Verbindungsteil einer bajonettartigen Verbindung, aufweisen.

Vorteilhafterweise kann wenigstens eine kopfseitige Dichtfläche auf einer radial gegenüberliegenden Seite eines kopfseitigen Verbindungselements wenigstens eines kopfseitigen Verbindungsteils angeordnet sein. Auf diese Weise können Radialkräfte, die bei der Verbindung des Wechselfilters mit dem Filterkopf auf das kopfseitige Verbindungselement wirken, auf die kopfseitige Dichtfläche übertragen werden. Auf diese Weise kann eine Dichtfunktion verbessert werden.

Vorteilhafterweise kann die wenigstens eine Dichtung, insbesondere Außendichtung, von den Verbindungsteilen getrennt, also nicht unmittelbar mit einem der Verbindungsteile verbunden, sein. Auf diese Weise können die wenigstens eine Dichtung und die Verbindungsteile für ihre jeweilige Funktion jeweils optimiert sein. Ferner kann die wenigstens eine Dichtung von mechanischen Kräften, die auf die Verbindungsteile wirken, entkoppelt sein. Ferner können so etwaige Lagetoleranzen besser ausgeglichen werden.

Zwischen dem Formbördel und den Verbindungsteilen ist wenigstens ein weiteres mechanisches Zwischen-Bauteil, nämlich ein Ringscheibenabschnitt eines Gehäusedeckels, und ein Kraftübertragungselement des Wechselfilters angeordnet. Die wenigstens eine Dichtung und die Verbindungsteile sind also durch das wenigstens eine Zwischen-Bauteil getrennt. Das wenigstens eine Zwischen-Bauteil kann eine mechanische Entkopplung zwischen der wenigstens einen Dichtung und wenigstens einem der Verbindungsteile bewirken. Gleichzeitig kann das wenigstens eine Zwischen-Bauteil eine Erhöhung der Gestaltungsfreiheit sowohl der Verbindungsteile als auch der wenigstens einen Dichtung ermöglichen. Insbesondere können bauliche Maßnahmen insbesondere zur Kompensation von mechanischen Belastungen, die auf die wenigstens eine Dichtung, auf die Verbindungsteile und auf das wenigstens eine Zwischen-Bauteil jeweils wirken, und/oder bauteilbedingten oder betriebsbedingten Toleranzen und/oder betriebsbedingten Schwingungen getrennt voneinander jeweils verbessert werden.

Die Verbindungsteile können jeweils aus einem einzigen Material oder aus einem Materialmix hergestellt sein. Die Verbindungsteile können vorteilhafterweise aus Kunststoff, Metall, insbesondere Aluminium und/oder Blech, sein oder ein derartiges Material aufweisen. Das wenigstens eine kopfseitige Verbindungsteil und das wenigstens eine filterseitige Verbindungsteil können aus dem gleichen Material oder unterschiedlichen Materialien sein.

Der Wechselfilter kann vorteilhafterweise einen runden Querschnitt haben. Der Wechselfilter kann vorteilhafterweise koaxial zu einer Filterachse sein. Die Filterachse kann vorteilhafterweise mit der Verbindungsachse zusammenfallen. Auf diese Weise kann eine Montage vereinfacht werden.

Der Wechselfilter umfasst wenigstens ein Filterelement. Das Filterelement kann vorteilhafterweise ein umfangsmäßig geschlossenes Filtermedium aufweisen. Das Filtermedium kann vorteilhafterweise sternförmig oder zickzackförmig gefaltet oder gebogen sein. Das Filtermedium kann vorteilhafterweise an wenigstens einer Stirnseite mit einem Endkörper, insbesondere einer Endscheibe, dicht verbunden sein. Das Filterelement kann vorteilhafterweise koaxial zur Filterachse sein.

Das Filterelement kann vorteilhafterweise wenigstens einen Stützkörper aufweisen. Der Stützkörper kann vorteilhafterweise ein Mittelrohr sein. Der Stützkörper kann sich vorteilhafterweise in einem Elementinnenraum des Filterelements befinden. Der Stützkörper kann sich zwischen den Endkörpern erstrecken. Wenigstens ein Endkörper kann sich bzgl. der Filterachse axial an den wenigstens einen Stützkörper abstützen. Auf diese Weise können zwischen dem wenigstens einen Endkörper und dem wenigstens einen Stützkörper wenigstens bzgl. der Verbindungsachse axial gerichtete Kräfte übertragen werden.

Vorteilhafterweise kann der Wechselfilter zusätzlich wenigstens ein Bauteil einer Abscheidevorrichtung zur Abscheidung von Wasser aus dem Fluid, insbesondere Kraftstoff oder Öl, aufweisen. Vorteilhafterweise kann der Wechselfilter wenigstens ein Koaleszenzmedium und/oder wenigstens ein Trennrohr, insbesondere einen Siebkorb, aufweisen. Mit dem Koaleszenzmedium können kleinste in dem Fluid enthaltene Wassertröpfchen zu großen Wassertropfen vereint werden. Das Trennrohr kann eine Umfangswand mit/aus einem hydrophoben (Sieb)material aufweisen. Die Umfangswand des Trennrohrs kann wenigstens abschnittsweise siebartig sein. An der Umfangswand können die Wassertropfen zurückgehalten werden und in einem entsprechenden stromaufwärtigen Ausfällspalt, je nach Dichte des zu reinigenden Fluids, aufgrund der Schwerkraft nach unten sinken oder nach oben steigen. Das zu reinigende Fluid kann durch die Umfangswand des Trennrohrs strömen. Das Trennrohr kann an einem Ende mit einem Fluidauslass, insbesondere einem Auslasszylinder, des Wechselfilters verbunden sein. So kann das von Wasser befreite Fluid aus dem Trennrohr durch den Fluidauslass nach außen gelangen. Der Auslasszylinder kann einfach mit einem entsprechenden Anschlussstutzen des Filterkopfs insbesondere durch Aufeinander- oder Ineinanderstecken fluidtechnisch in Verbindung gebracht werden.

Die Filtervorrichtung, insbesondere das Wechselfilterelement, ist geeignet zur Reinigung, insbesondere Filtrierung, von Fluid. Insbesondere können Flüssigkeiten, insbesondere Öl oder Kraftstoff, damit gereinigt werden. Vorteilhafterweise können Betriebsflüssigkeiten der Brennkraftmaschine mit der Filtervorrichtung, insbesondere dem Wechselfilterelement, gereinigt werden. Bei der Reinigung kann das Fluid filtriert und von Schmutzpartikeln befreit werden. Zusätzlich kann im Fluid enthaltenes Wasser abgeschieden werden.

Die Filtervorrichtung kann bei Brennkraftmaschinen von Kraftfahrzeugen eingesetzt werden. Sie kann auch bei andersartigen Brennkraftmaschinen, insbesondere Industriemotoren, Verwendung finden. Die Erfindung kann auch außerhalb von Brennkraftmaschinen, insbesondere in der Kraftfahrzeugtechnik, eingesetzt werden.

Die Filtervorrichtung weist einen Filterkopf auf, an dem ein Wechselfilter montiert werden kann. Der Filterkopf kann wenigstens einen Zulauf und/oder wenigstens einen Ablauf für das Fluid aufweisen. Der Filterkopf kann vorzugsweise fest an einem Rahmen fixiert sein. Der Rahmen kann insbesondere Teil der Brennkraftmaschine und/oder des Kraftfahrzeugs sein.

Der Filterkopf weist wenigstens ein kopfseitiges Verbindungsteil der Verbindungseinrichtung für den Wechselfilter auf. Der Wechselfilter weist wenigstens ein filterseitiges Verbindungsteil der Verbindungseinrichtung auf. Wenigstens ein kopfseitiges Verbindungsteil kann mit wenigstens einem filterseitigen Verbindungsteil lösbar verbunden werden.

Die Verbindungseinrichtung kann vorteilhafterweise mittels einer kombinierten Steckbewegung und Drehbewegung (Steck- und/oder Drehbewegung) bzgl. der Verbindungsachse schließbar und lösbar sein. Kombinierte Steck-/Drehverbindungen können einfach und schnell geschlossen und geöffnet werden. Ferner sind sie robust gegenüber Zugbelastungen in Richtung der Verbindungsachse. Mit der Verbindungseinrichtung kann so einfach ein Schnellverschluss realisiert werden, der einfach und schnell geschlossen und geöffnet werden kann. Eine steck- und/oder drehbare Verbindung kann insbesondere als Schraubverbindung und/oder bajonettverschlussartige Verbindung realisiert sein. Im Falle einer Schraubverbindung kann der Wechselfilter als Spin-On Filter oder Anschraubfilter bezeichnet werden.

Mit der wenigstens einen Dichtung, insbesondere Außendichtung, können die fluidführenden Räume, insbesondere Räume zwischen dem Wechselfilter und dem Filterkopf und/oder Fluidöffnungen, von der Umgebung dicht getrennt werden. Dabei kann sich die wenigstens eine Dichtung auf der Rohseite oder der Reinseite des Filterelements des Wechselfilters befinden. Dies kann von der Strömungsrichtung des Fluids durch den Wechselfilter abhängen.

Bei einer vorteilhaften Ausführungsform kann wenigstens eine Dichtungsaufnahmenut bzgl. der Verbindungsachse nach radial innen und/oder wenigstens eine Dichtungsaufnahmenut nach radial außen offen sein. Auf diese Weise kann die wenigstens eine Dichtung von der offenen Seite in die wenigstens eine Dichtungsaufnahmenut eingebracht werden. Die wenigstens eine Dichtung kann durch die offene Seite der wenigstens einen Dichtungsaufnahmenut radial herausragen. Mit ihrem herausragenden Abschnitt kann sie in radialer und/oder axialer Richtung dichtend mit wenigstens einer entsprechenden Dichtfläche auf Seiten des Filterkopfs zusammenwirken.

Bei einer weiteren vorteilhaften Ausführungsform kann der Gehäusetopf wenigstens in seinem Randbereich aus Blech sein. Auf diese Weise kann der Randbereich des Gehäusetopfs einfach und zuverlässig mit dem Blechumformteil mittels des Formbördels verbunden werden.

Vorteilhafterweise kann der gesamte Gehäusetopf aus Blech sein. Auf diese Weise kann er einfach und stabil in einem Stück realisiert werden.

Bei einer weiteren vorteilhaften Ausführungsform kann die bzgl. der Verbindungsachse radial offene Seite wenigstens einer Dichtungsaufnahmenut bzgl. der Verbindungsachse radial betrachtet gegenüber einer Verbindungsseite wenigstens eines filterseitigen Verbindungsteils, insbesondere eines Gewindes und/oder eines Verbindungselements einer bajonettverschlussartigen Verbindung, welches sich bzgl. der Verbindungsachse auf derselben Seite befindet, angeordnet sein.

Auf diese Weise kann einfach ein entsprechendes kopfseitiges Verbindungsteil radial zwischen der wenigstens einen Dichtung und dem wenigstens einen filterseitigen Verbindungsteil angeordnet werden. Das wenigstens eine kopfseitige Verbindungsteil kann so mittels dem wenigstens einen filterseitigen Verbindungsteil gegen die wenigstens eine Dichtung gedrückt werden. So kann eine Dichtwirkung weiter verbessert werden.

Vorteilhafterweise kann ein ringförmiges filterseitiges Verbindungsteil bzgl. der Verbindungsachse radial innerhalb wenigstens einer Dichtungsaufnahmenut angeordnet sein. Die wenigstens eine Dichtungsaufnahmenut kann in diesem Fall nach radial innen offen sein. Alternativ kann das ringförmige filterseitige Verbindungsteil radial außerhalb wenigstens einer Dichtungsaufnahmenut angeordnet sein. In diesem Fall kann die wenigstens eine Dichtungsaufnahmenut nach radial außen offen sein.

Das kopfseitige Verbindungsteil kann vorteilhafterweise als Hohlzylinderabschnitt oder an einem Hohlzylinderabschnitt realisiert sein. Eine Umfangswand des Hohlzylinderabschnitts kann vorteilhafterweise bzgl. der Verbindungsachse wenigstens teilweise radial zwischen der wenigstens einen Dichtung und wenigstens einem filterseitigen Verbindungsteil angeordnet werden. Eine Umfangsseite des Hohlzylinderabschnitts kann wenigstens ein kopfseitiges Verbindungselement aufweisen. Die andere Umfangsseite kann wenigstens eine kopfseitige Dichtfläche für wenigstens eine Dichtung, insbesondere Außendichtung, aufweisen.

Erfindungsgemäß ist zwischen wenigstens einem Deckelbauteil einerseits und dem Formbördel andererseits wenigstens ein Kraftübertragungselement, insbesondere ein Kraftübertragungsring, bzgl. der Verbindungsachse axial kraftübertragend angeordnet.

Mit dem wenigstens einen Kraftübertragungselement kann eine zusätzliche Kontur realisiert werden. Mit dem wenigstens einen Kraftübertragungselement können axiale Kräfte von dem Filterelement aufgenommen und an den Formbördel übertragen werden und so von dem Blechumformteil, insbesondere wenigstens eine Dichtungsaufnahmenut, ferngehalten werden. Eine Anforderung an die mechanische Stabilität des Blechumformteils kann so entsprechend verringert werden. Auf diese Weise kann für die Realisierung des Blechumformteils auch relativ dünnes Blech verwendet werden.

Außerdem kann wenigstens ein Deckelbauteil und/oder wenigstens ein filterseitiges Verbindungsteil, insbesondere aus Spritzguss gefertigte Teile, so einfacher ausgestaltet sein. Eine Stabilität der Abstützung des wenigstens einen Deckelbauteils und/oder des wenigstens einen filterseitigen Verbindungsteils gegen das Gehäuse, insbesondere dem Gehäusetopf, kann mit dem wenigstens einen Kraftübertragungselement erhöht werden.

Vorteilhafterweise kann wenigstens ein Kraftübertragungselement aus Blech sein. Vorteilhafterweise kann eine Wandstärke des Blechs des wenigstens einen Kraftübertragungselements größer sein als eine Wandstärke des Blechumformteils.

Vorteilhafterweise kann wenigstens ein Kraftübertragungselement mit Stütz- und/oder Stabilisierungsstrukturen ausgestattet sein. Auf diese Weise kann die mechanische Stabilität insbesondere bzgl. der Verbindungsachse in axialer Richtung verbessert werden. Um die gleiche mechanische Stabilität insbesondere bzgl. axialer Kraftübertragung zu erreichen, können so auch dünnere Wandstärken verwendet werden. So kann Material eingespart werden. Dies kann sich sowohl in Bezug auf das Gewicht als auch auf den Platzbedarf positiv auswirken. Vorteilhafterweise kann wenigstens ein Kraftübertragungselement Prägestrukturen aufweisen. Die Prägestrukturen können sich wenigstens axial erstrecken.

Vorteilhafterweise kann wenigstens ein Kraftübertragungselement einstückig oder mehrstückig mit wenigstens einem Deckelbauteil, insbesondere einem Gehäusedeckel, und/oder wenigstens einem filterseitigen Verbindungsteil realisiert sein. Auf diese Weise kann ein Herstellungsaufwand und/oder ein Montageaufwand und/oder ein Bauteileaufwand verringert werden. Vorteilhafterweise kann wenigstens ein Kraftübertragungselement als eine Verlängerung wenigstens eines Deckelbauteils und/oder eines filterseitigen Verbindungsteils realisiert sein.

Alternativ oder zusätzlich kann wenigstens ein Kraftübertragungselement separat von wenigstens einem Deckelbauteil und/oder wenigstens einem filterseitigen Verbindungsteil realisiert sein. Auf diese Weise können die entsprechenden Bauteile unabhängig voneinander, auch aus unterschiedlichen Materialien, realisiert werden.

Vorteilhafterweise kann wenigstens ein Kraftübertragungselement als Kraftübertragungsring realisiert sein. Mit dem Kraftübertragungsring können bzgl. der Verbindungsachse umfangsmäßig insbesondere gleichmäßig axiale Kräfte übertragen werden.

Bei einer weiteren vorteilhaften Ausführungsform kann bzgl. der Verbindungsachse radial zwischen dem Blechumformteil und einer Umfangswand des Gehäusetopfs eine Aufnahme für wenigstens ein Kraftübertragungselement realisiert sein. Das wenigstens eine Kraftübertragungselement kann so platzsparend in der Aufnahme angeordnet werden. Das wenigstens eine Kraftübertragungselement kann bzgl. einer axialen Kraftübertragung etwa parallel zu wenigstens einem Abschnitt des Blechumformteils verlaufen.

Bei einer weiteren vorteilhaften Ausführungsform kann das Blechumformteil wenigstens ein Sicherungselement, insbesondere wenigstens eine Sicherungslasche, einer Verdrehsicherung aufweisen, das mit wenigstens einem Gegensicherungselement, insbesondere wenigstens eine Sicherungsaufnahme, der Verdrehsicherung auf Seiten wenigstens eines filterseitigen Verbindungsteils, insbesondere eines Deckelbauteils, zusammenwirken kann, um eine Relativdrehung zwischen dem Blechumformteil und dem wenigstens einen filterseitigen Verbindungsteil, insbesondere den Deckelbauteil, zu begrenzen, insbesondere zu verhindern.

Vorteilhafterweise kann wenigstens ein Sicherungselement als vorstehendes Element, insbesondere als Lasche, Fuß oder Stift, am Blechumformteil realisiert sein. Wenigstens ein Sicherungselement kann als axiale Verlängerung des Blechumformteils realisiert sein.

Wenigstens ein Gegensicherungselement auf Seiten wenigstens eines filterseitigen Verbindungsteils, insbesondere eines Deckelbauteils, kann als Vertiefung oder Aufnahme, insbesondere Loch oder Öffnungen, realisiert sein, in die wenigstens ein vorstehendes Sicherungselement eingreifen kann.

Alternativ oder zusätzlich kann wenigstens ein Gegensicherungselement auf Seiten wenigstens eines filterseitigen Verbindungsteils, insbesondere eines Deckelbauteils, als vorstehendes Element und wenigstens ein entsprechendes Sicherungselement auf Seiten des Blechumformteils als Vertiefung oder Aufnahme realisiert sein.

Vorteilhafterweise kann die Verdrehsicherung eine Mehrzahl von paarweise zusammenwirkenden Sicherungselementen und Gegensicherungselementen aufweisen. Auf diese Weise kann eine gleichmäßigere Kraftverteilung erreicht werden. Die Sicherungselemente/Gegensicherungselemente können vorteilhafterweise bzgl. der Verbindungsachse umfangsmäßig insbesondere gleichmäßig verteilt angeordnet sein.

Mit der Verdrehsicherung kann ein Drehmoment von dem Gehäusetopf über den Formbördel und das Blechumformteil an das wenigstens eine filterseitige Verbindungsteil, insbesondere das Deckelbauteil, übermittelt werden. So kann das wenigstens eine filterseitige Verbindungsteil durch Drehen des Gehäusetopfs relativ zum Filterkopf mit diesem verbunden oder von diesem getrennt werden.

Die Sicherungselemente/Gegensicherungselemente können vorteilhafterweise unter Beibehaltung eines jeweiligen Spiels zusammenwirken. Auf diese Weise kann eine Lagetoleranz zwischen dem Blechumformteil und dem wenigstens einen filterseitigen Verbindungsteil, insbesondere den Deckelbauteil, ausgeglichen werden. Alternativ oder zusätzlich können Sicherungselemente/Gegensicherungselemente auch spielfrei zusammenwirken.

Ferner wird die Aufgabe erfindungsgemäß mit der Filtervorrichtung nach Anspruch 7 gelöst.

Die oben im Zusammenhang mit dem erfindungsgemäßen Wechselfilter und dessen vorteilhaften Ausgestaltungen aufgezeigten Vorteile und Merkmale gelten für die erfindungsgemäße Filtervorrichtung und deren vorteilhafte Ausgestaltungen entsprechend und umgekehrt.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Längsschnitt eines Filtersystems für Motoröl einer Brennkraftmaschine eines Kraftfahrzeugs mit einem Filterkopf, an dem ein Wechselfilter mittels einer lösbaren Verbindungseinrichtung befestigt ist;
- Figur 2: einen Längsschnitt des Wechselfilters aus Figur 1;
- Figur 3: eine isometrische Darstellung des Wechselfilters aus Figuren 1 und 2;
- Figur 4: eine Detailansicht des Längsschnitts des Filtersystems aus Figur 1 im Bereich einer Außendichtung zwischen dem Wechselfilter und dem Filterkopf;
- Figur 5: eine isometrische Darstellung eines Gehäusedeckels des Wechselfilters aus Figuren 1 bis 4, mit Blick auf eine einem Innenraum des Wechselfilters zugewandte Innenseite;
- Figur 6: eine isometrische Darstellung des Gehäusedeckels aus Figur 5 mit Blick auf seine Außenseite;
- Figur 7: einen Längsschnitt des Gehäusedeckels aus Figuren 5 und 6;
- Figur 8: eine isometrische Darstellung eines Deckelblechrings des Wechselfilters aus Figuren 1 bis 4;
- Figur 9: einen Längsschnitt des Deckelblechrings aus Figur 8.

In den Figuren sind gleiche Bauteile mit gleichen Bezugszeichen versehen.

### Ausführungsform(en) der Erfindung

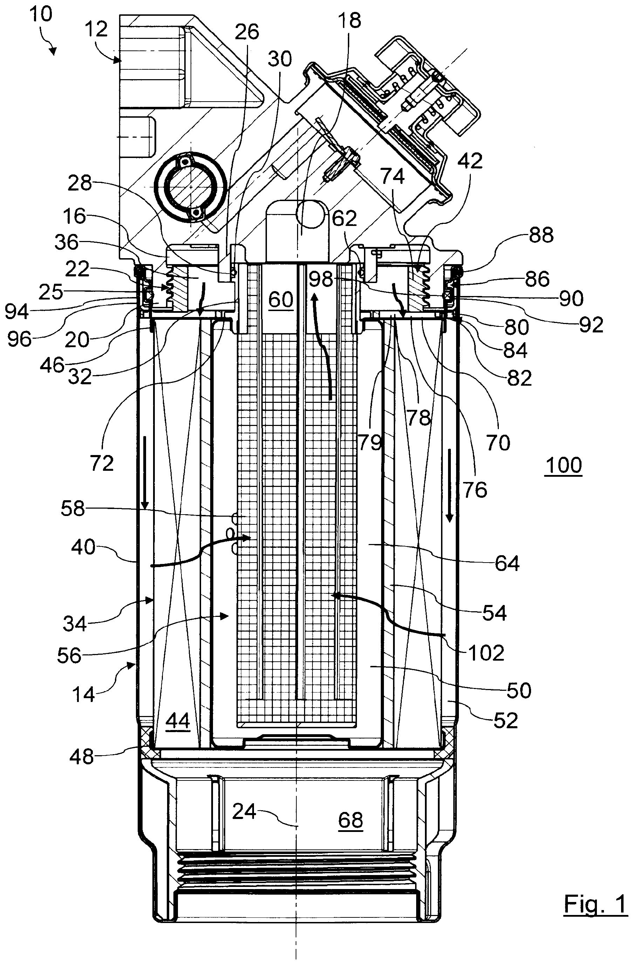

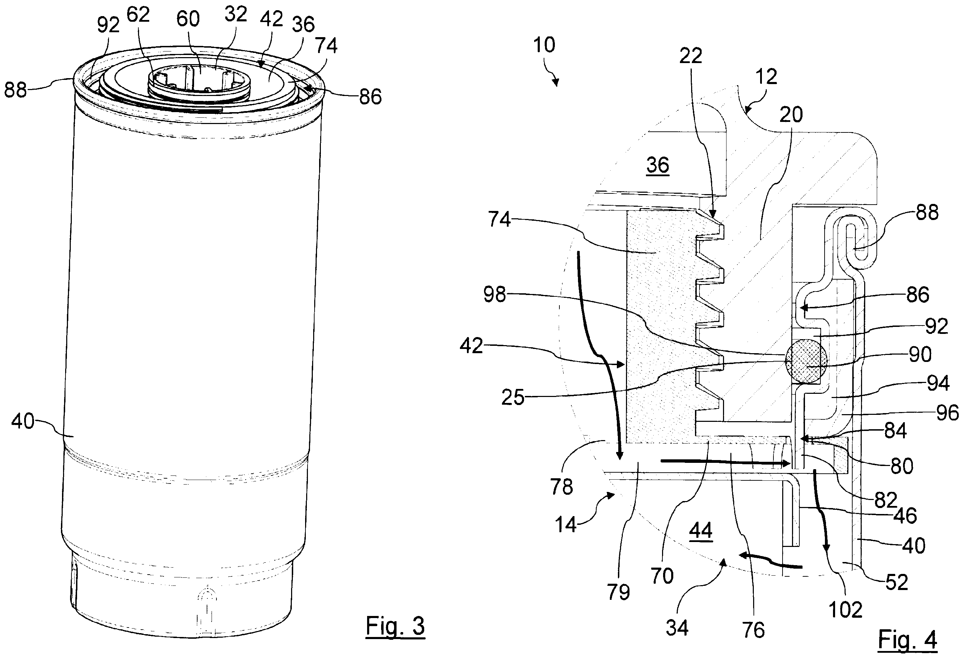

In Figur 1 ist ein Filtersystem 10 beispielsweise für Motoröl einer Brennkraftmaschine eines Kraftfahrzeugs in einem Längsschnitt gezeigt. Figur 4 zeigt eine Detailansicht des Filtersystems 10. Das Filtersystem 10 kann alternativ auch für eine andere Betriebsflüssigkeit, beispielsweise Kraftstoff, einer Brennkraftmaschine eingesetzt werden.

Das Filtersystem 10 umfasst einen Filterkopf 12, an dem ein Wechselfilter 14 lösbar befestigt ist. Der Filterkopf 12 ist aus Metall. Der Filterkopf 12 ist fest mit der Brennkraftmaschine verbunden und dient als Anschlussteil für den Wechselfilter 14. Der Filterkopf 12 umfasst einen Einlass 16 und einen Auslass 18 für das Motoröl. Der Einlass 16 und der Auslass 18 sind in hier nicht weiter interessierender Weise mit entsprechenden Ölleitungen der Brennkraftmaschine verbunden.

Ferner verfügt der Filterkopf 12 über ein kopfseitiges Verbindungsteil 20 einer insgesamt mit 22 bezeichneten, lösbaren Verbindungseinrichtung zum Verbinden des Wechselfilters 14 mit dem Filterkopf 12. Das kopfseitige Verbindungsteil 20 ist aus Metall.

Das kopfseitige Verbindungsteil 20 hat die Form eines Hohlzylinderabschnitts, der einstückig mit dem Hauptteil des Filterkopfs 12 verbunden ist. Das kopfseitige Verbindungsteil 20 ist koaxial zu einer Filterachse 24. An seiner radial inneren Umfangsseite weist das kopfseitige Verbindungsteil 20 ein Innengewinde als Verbindungselement auf. Die radial äußere Umfangsseite des kopfseitigen Verbindungsteils 20 bildet eine Außendichtfläche 25.

Wenn im Folgenden von "axial", "radial", "koaxial", "umfangsmäßig" oder dergleichen die Rede ist, so bezieht sich dies, sofern nicht anders erwähnt, auf die Filterachse 24.

Der Filterkopf 12 umfasst ferner einen koaxialen zylindrischen Anschlussstutzen 26, welcher sich radial innerhalb des kopfseitigen Verbindungsteils 20 befindet. Ein Innenraum des Anschlussstutzens 26 ist mit dem Auslass 18 des Filterkopfs 12 verbunden.

An seinem dem Wechselfilter 14 axial zugewandten Ende weist der Anschlussstutzen 26 an seiner radial inneren Umfangsseite eine Dichtfläche 28 für eine Innendichtung 30 auf. Die Innendichtung 30 befindet sich radial außen am Ende eines Anschlusszylinders 32 eines Filterelements 34 des Wechselfilters 14. Anschlussstutzen 26 steckt auf dem Anschlusszylinder 32.

Der Anschlussstutzen 26 und der Anschlusszylinder 32 sind radial außen von einem Einlassringraum 36 umgeben. Der Einlassringraum 36 ist zwischen dem Filterkopf 12 und dem Wechselfilter 14 gebildet.

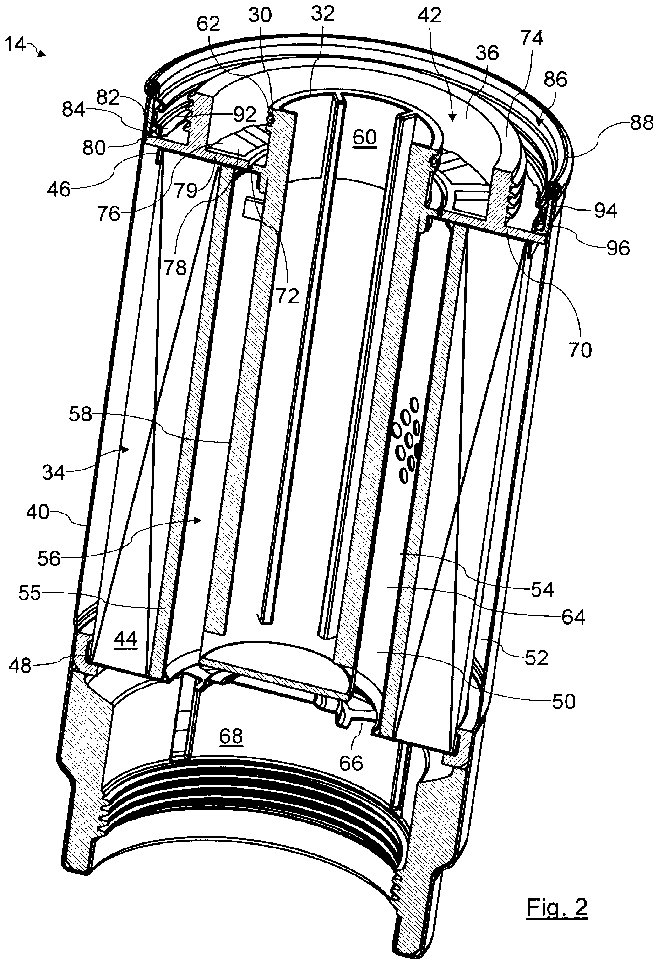

Der Wechselfilter 14, der in Fig. 2 im Detail und in Fig. 3 im Längsschnitt gezeigt ist, ist als Spin-On Filter mit einem runden Querschnitt ausgelegt. Er ist im Wesentlichen koaxial zur Filterachse 24. Der Wechselfilter 14 weist einen Gehäusetopf 40 auf, in dessen offener Seite ein Gehäusedeckel 42 befestigt ist.

Im Gehäusetopf 40 ist das als Rundfilterelement ausgelegte Filterelement 34 koaxial angeordnet. Das Filterelement 34 verfügt über ein zickzackförmig gefaltetes, umfangsmäßig geschlossenes Filtermedium 44. An seinen Stirnseiten ist das Filtermedium 44 jeweils dicht mit einer Anschlussendscheibe 46, in Fig. 1 und 2 oben, und einer Gegenendscheibe 48, unten, verbunden.

Die Anschlussendscheibe 46 befindet sich auf der dem Gehäusedeckel 42 zugewandten Seite des Filterelements 34. Das Filtermedium 44 umgibt einen Elementinnenraum 50 des Filterelements 34. Der Elementinnenraum 50 befindet sich auf einer abströmseitigen Reinseite des Filtermediums 44

Die Gegenendscheibe 48 schließt den Elementinnenraum 50 auf der einem Topfboden des Gehäusetopfs 40 zugewandten Stirnseite des Filterelements 34 ab. Bei dem vorliegenden Ausführungsbeispiel ist der Topfboden in ein entsprechendes Innengewinde an der radial inneren Umfangsseite des Gehäusetopfs 40, in Figur 1 und 2 von unten, einschraubbar. In Figuren 1 und 2 ist der Topfboden nicht gezeigt. An der dem Topfboden zugewandten Seite stützt sich das Filterelement 34 in hier nicht weiter interessierender Weise unter Zwischenlage einer Ringdichtung axial dicht gegen eine entsprechende Stufe des Gehäusetopfs 40 ab.

Das Filterelement 34 ist radial außen von einem rohseitigen Ringraum 52 umgeben, der von der radial inneren Umfangsseite des Gehäusetopfs 40 begrenzt wird.

Im Elementinnenraum 50 erstreckt sich ein koaxiales Mittelrohr 54 zwischen der Gegenendscheibe 48 und der Anschlussendscheibe 46. Eine Umfangswand des Mittelrohrs 54 weist eine Mehrzahl von Durchtrittsöffnungen für Motoröl auf.

Zwischen der radial inneren Umfangsseite des Filtermediums 44 und der radial äußeren Umfangsseite des Mittelrohrs 54 ist des Weiteren ein Koaleszenzmedium 55 einer Wasserabscheideeinrichtung 56 angeordnet. Mit dem Koaleszenzmedium 55 können im Motoröl enthaltene kleinste Wassertröpfchen zu größeren Wassertropfen vereinigt werden.

Die Anschlussendscheibe 46 weist eine koaxiale zentrale Öffnung auf, durch die ein koaxiales Trennrohr 58 der Wasserabscheideeinrichtung 56 hindurch führt. An der Außenseite des Filterelements 34 außerhalb des Elementinnenraums 50 bildet das Trennrohr 58 den Anschlusszylinder 32. An seinem Ende mit dem Anschlusszylinder 32 ist das Trennrohr 58 offen. An seinem axial gegenüberliegenden, der Gegenendscheibe 48 zugewandten Ende ist das Trennrohr 58 geschlossen. Innerhalb des Elementinnenraums 50 ist das Trennrohr 58 als Siebkorb ausgestaltet. Eine Umfangswand des Trennrohrs 58 weist dort ein hydrophobes, für Motoröl durchlässiges Siebmaterial auf.

Der Anschlusszylinder 32 definiert eine koaxiale Auslassöffnung 60 des Wechselfilters 14 für das gereinigte Motoröl. Die Auslassöffnung 60 bildet einen mittigen ölablaufkanal.

Im Bereich seiner dem Elementinnenraum 50 abgewandten Stirnseite weist der Anschlusszylinder 32 eine koaxiale Dichtungsnut 62 für die Innendichtung 30. Die Innendichtung 30 ist als O-Ring-Dichtung ausgestaltet. Bei montiertem Wechselfilter 14 liegt die Innendichtung 30 mit ihrer radial äußeren Seite dicht an der Dichtfläche 28 des Anschlussstutzens 26 des kopfseitigen Verbindungsteils 20 an. Die Innendichtung 30 wirkt in radialer Richtung dichtend. Die Innendichtung 30 trennt eine anströmseitige Rohseite des Filterelements 34 radial außerhalb des Anschlusszylinders 32, respektive den Einlassringraum 36, dicht von der Reinseite.

Ein Ringraum zwischen der radial äußeren Umfangsseite des Trennrohrs 58 und der radial inneren Umfangsseite des Mittelrohrs 54 bildet einen Ausfällspalt 64 für Wasser, welches mit der Wasserabscheideeinrichtung 56 vom Motoröl abgeschieden wird. Der Ausfällspalt 64 ist auf seiner der Anschlussendscheibe 46 zugewandten Seite mit dieser und einem nach radial außen abstehenden Kragen des Trennrohrs 58 verschlossen.

Die Gegenendscheibe 48 weist in Figur 2 gezeigte Wasserauslassöffnungen 66 auf, welche den Ausfällspalt 64 mit einem Wassersammelraum 68 verbinden. Der Wassersammelraum 68 befindet sich zwischen dem in den Figuren nicht gezeigten Topfboden des Gehäusetopfs 40 und der Gegenendscheibe 48. Der Topfboden kann zum Ablassen von im Wassersammelraum 68 gesammelten Wasser herausgeschraubt werden.

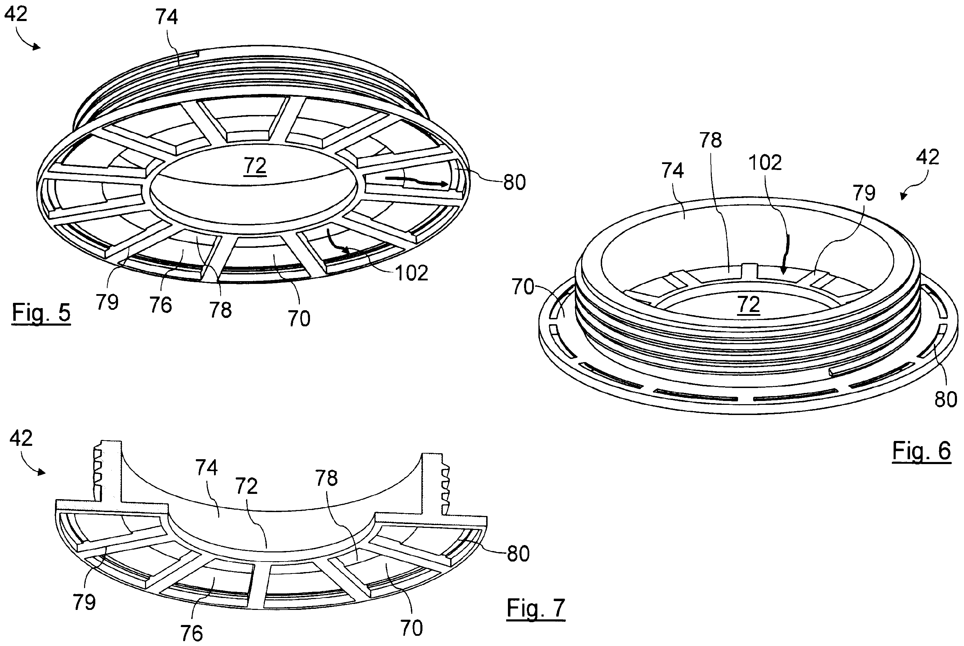

Der Gehäusedeckel 42 ist im Detail in Figuren 5 bis 7 gezeigt. Der Gehäusedeckel 42 ist einstückig aus Kunststoff gespritzt. Er weist einen koaxialen Ringscheibenabschnitt 70 auf. Der Ringscheibenabschnitt 70 verfügt über eine koaxiale Durchstecköffnung 72 für den Anschlusszylinder 32 des Filterelements 34.

In radialer Richtung betrachtet etwa mittig zwischen dem radial inneren Rand und dem radial äußeren Rand des Ringscheibenabschnitts 70 ist ein filterseitiges Verbindungsteil 74 der Verbindungseinrichtung 22 einstückig mit dem Ringscheibenabschnitt 70 verbunden. Das filterseitige Verbindungsteil 74 hat die Form eines runden koaxialen Hohlzylinders. Das filterseitige Verbindungsteil 74 erstreckt sich auf der dem Filterelement 34 axial abgewandten Außenseite des Gehäusedeckels 42. An seiner radial äußeren Umfangsseite weist das filterseitige Verbindungsteil 74 ein zu dem Innengewinde des kopfseitigen Verbindungsteils 20 passendes Außengewinde als Verbindungselement auf.

Der Ringscheibenabschnitt 70 weist auf seiner dem filterseitigen Verbindungsteil 74 axial abgewandten Innenseite eine Mehrzahl von kreissektorartigen Aussparungen auf. Die Aussparungen sind umfangsmäßig verteilt angeordnet und erstrecken sich jeweils in radialer Richtung. Die Aussparungen bilden Einlasskanäle 76 für das zu reinigende Motoröl. Im Bereich des Ringscheibenabschnitts 70 radial zwischen der radial inneren Umfangsseite des filterseitigen Verbindungsteils 74 und der radial inneren Umfangsseite des Ringscheibenabschnitts 70 sind die Aussparungen axial durchgängig offen und bilden dort Einlassöffnungen 78 der Einlasskanäle 76. Die Einlasskanäle 76 verbinden den Einlassringraum 36 des Filterkopfs 12 mit dem Ringraum 52 des Gehäusetopfs 40. Radial verlaufende Rippen 79 zwischen benachbarten Einlasskanälen 76 dienen als Abstandshalter und stützen sich gegen die Außenseite der Anschlussendscheibe 46 axial ab. Ein koaxialer Ringabschnitt definiert die Durchstecköffnung 72 und verbindet die radial inneren Enden der Rippen 79.

Im Bereich des radial äußeren Randes des Ringscheibenabschnitts 70 radial außerhalb des filterseitigen Verbindungsteils 74 sind die Aussparungen ebenfalls axial durchgängig offen und bilden dort sich umfangsmäßig erstreckende schlitzartige Sicherungsaufnahmen 80 für Sicherungslaschen 82 einer Verdrehsicherung 84 eines Deckelblechrings 86. Radial zwischen den Sicherungsaufnahmen 80 und den Einlassöffnungen 78 sind die der Außenseite des Gehäusedeckels 42 zugewandten Rückwände der Einlasskanäle 76 geschlossen.

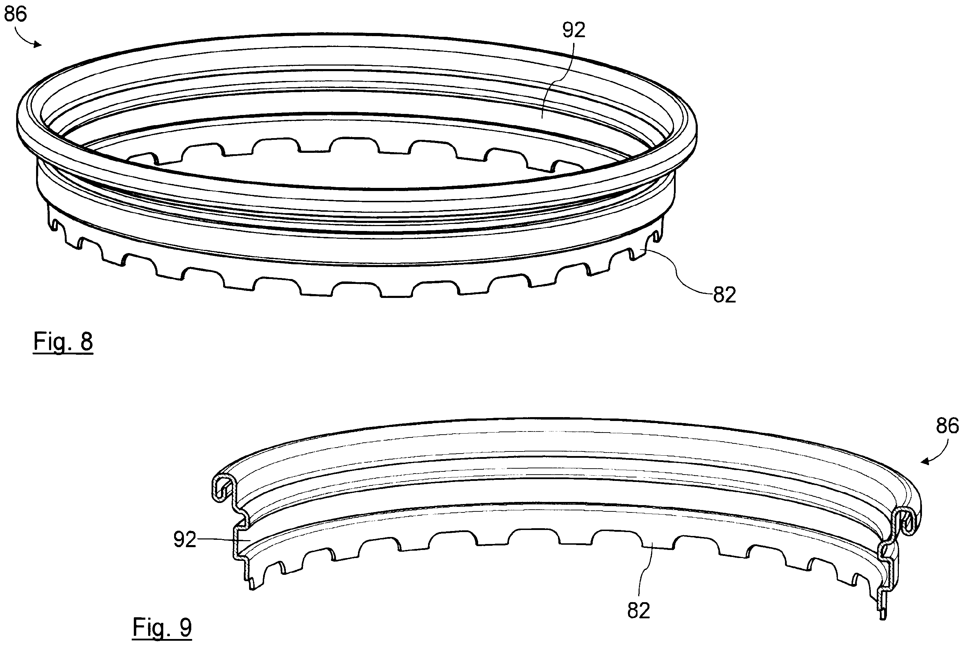

Der Deckelblechring 86 ist im Detail in Figuren 8 und 9 gezeigt. Der Deckelblechring 86 ist aus Blech umgeformt. Er weist ein mehrfach gebogenes Profil auf. Mit seiner radial äußeren Umfangsseite ist er mittels einer Bördelverbindung 88 fest mit einem freien Rand des Gehäusetopfs 40 verbunden. Bei der Bördelverbindung 88 handelt es sich um einen Formbördel.

Der Deckelblechring 86 dient als Halterung für eine Außendichtung 90 und den Gehäusedeckel 42 an dem Gehäusetopf 40. Radial innerhalb der Bördelverbindung 88 ist der Deckelblechring 86 etwa koaxial kreiszylindrisch. In axialer Richtung von der Bördelverbindung 88 in Richtung auf den Topfboden des Gehäusetopfs 40 betrachtet hinter der Bördelverbindung 88 weist der Deckelblechring 86 einen sich nach radial innen erstreckenden Ringkragen auf. Der Ringkragen begrenzt eine Dichtungsaufnahmenut 92 auf der der Bördelverbindung 88 zugewandten axialen Seite.

Die Dichtungsaufnahmenut 92 hat ein U-förmiges Profil und ist nach radial innen offen. An die Dichtungsaufnahme 92 schließt sich ein Sicherungsbereich mit den Sicherungslaschen 82 der Verdrehsicherung 84 an. Die Sicherungslaschen 82 sind umfangsmäßig verteilt angeordnet. Sie erstrecken sich jeweils in axialer Richtung von der Dichtungsaufnahmenut 92 weg.

In der Dichtungsaufnahmenut 92 ist die Außendichtung 90 angeordnet. Die Außendichtung 90 ist unterhalb der dem Filterkopf 12 zugewandten Seite der Bördelverbindung 88, also innerhalb des Gehäusetopfs 40, angeordnet. Die Außendichtung 90 ist eine O-Ring-Dichtung. Die Außendichtung 90 ist bzgl. der Filterachse 24 nach radial innen orientiert. Die Außendichtung 90 wirkt in radialer Richtung.

Radial zwischen dem Deckelblechring 86 und der radial inneren Umfangsseite des Gehäusetopfs 40 ist, wie in Fig. 1, 2, 4 gezeigt, eine ringförmige Aufnahme 94 für einen Kraftübertragungsring 96 realisiert. Die ringförmige Aufnahme 94 ist auf ihrer der Bördelverbindung 88 abgewandten Seite offen.

Der Kraftübertragungsring 96 ist aus Metall, beispielsweise gebogenem Blech. Er hat einen runden hohlzylindrischen Abschnitt, welcher auf der der Bördelverbindung 88 axial abgewandten Seite um etwa 90° nach radial innen gebogen ist. Insgesamt hat der Kraftübertragungsring 96 ein etwa J-förmiges Profil, wobei der untere Teil des "J" nach radial innen gerichtet ist.

Mit einem Rand stützt sich der Kraftübertragungsring 96 im Bereich der Bördelverbindung 88 axial an einer nach radial innen gebogenen Schulter der Umfangswand des Gehäusetopfs 40 ab. Mit seinem nach radial innen gebogenen Abschnitt stützt sich der Kraftübertragungsring 96 axial gegen die Außenseite des Ringscheibenabschnitts 70 des Gehäusedeckels 42 ab. Auf diese Weise kann eine Axialkraft zwischen dem Gehäusedeckel 42 mittels dem Kraftübertragungsring 96 direkt auf die Bördelverbindung 88 und so auf den Gehäusetopf 40 übertragen werden, ohne dass der Deckelblechring 86 mechanisch belastet wird. Dabei hält der radial innere Rand des nach radial innen gebogenen Abschnitts des Kraftübertragungsrings 96 auf der dem Ringscheibenabschnitt 70 zugewandten Seite ein radiales Spiel gegenüber dem Deckelblechring 86 ein. Die Dichtungsaufnahmenut 92 mit der Außendichtung 90 befindet sich axial zwischen den vorgenannten beiden axialen Abstützstellen des Kraftübertragungsrings 96.

Zur Herstellung des Wechselfilters 14 wird der Gehäusetopf 40 aus Blech geformt. Der Deckelblechring 86 wird aus einem Rohrstück aus Blech mittels eines Tiefziehverfahrens in Kombination mit einem Hydroformverfahren umgeformt, so dass die entsprechende Kontur mit der Dichtungsaufnahmenut 92 entsteht. Der Kraftübertragungsring 96 wird aus Metall hergestellt, beispielsweise geformt und/oder gegossen.

Der Gehäusedeckel 42 mit dem filterseitigen Verbindungsteil 74, dem Außengewinde, den Einlasskanälen 76 und den Sicherungsaufnahmen 80 wird einstückig aus Kunststoff spritzgegossen oder als Blechumformteil hergestellt.

Das Filterelement 34 wird aus dem gefalteten Filtermedium 44, dem Koaleszenzmedium 55, den Endscheiben 74 und 76, dem Mittelrohr 54 und Trennrohr 58 vormontiert.

Das Filterelement 34 wird mit der Gegenendscheibe 48 voran unter Zwischenlage der Ringdichtung axial zur Filterachse 24 in den Gehäusetopf 40 gesteckt.

Der Gehäusedeckel 42 wird mit seiner dem filterseitigen Verbindungsteil 74 axial abgewandten Innenseite voran axial zur Filterachse 24 in die offene Seite des Gehäusetopfs 40 gesteckt, so dass der Anschlusszylinder 32 des Trennrohrs 58 des Filterelements 34 durch die Durchstecköffnung 72 des Ringscheibenabschnitts 70 ragt.

Anschließend wird der Kraftübertragungsring 96 mit seinem nach radial innen gebogenen Abschnitt voran axial zur Filterachse 24 durch die Öffnung des Gehäusetopfs 40 gesteckt und auf die dem Elementinnenraum 50 abgewandte Außenseite des Gehäusedeckels 42 gelegt.

Der Deckelblechring 86 wird mit den Sicherungslaschen 82 voran axial durch die Öffnung des Gehäusetopfs 40 gesteckt und auf die Außenseite des Gehäusedeckels 42 gelegt, so dass die Sicherungslaschen 82 jeweils durch eine Sicherungsaufnahme 80 des Gehäusedeckels 42 ragen.

Dann wird der freie Rand des Gehäusetopfs 40 mit dem entsprechenden Rand des Deckelblechrings 86 unter Zwischenlage von Dichtungsmaterial nach radial außen verbördelt und so die Bördelverbindung 102 realisiert.

Schließlich wird die Außendichtung 90 in die Dichtungsaufnahmenut 92 eingebracht. Dies kann auch schon zu einem früheren Zeitpunkt geschehen.

Zum Verbinden mit dem Filterkopf 12 wird der Wechselfilter 14 mit dem Gehäusedeckel 42 voran axial zu einer Verbindungsachse, welche im Ausführungsbeispiel mit der Filterachse 24 zusammenfällt, in einer Steckbewegung zunächst zu dem kopfseitigen Verbindungsteil 20 des Filterkopfs 12 hin bewegt. Das kopfseitige Verbindungsteil 20 wird dabei in den freien Bereich zwischen dem filterseitigen Verbindungsteil 74 und dem Deckelblechring 86 eingesteckt, so dass das Innengewinde des kopfseitigen Verbindungsteils 20 gegen das Außengewinde des filterseitigen Verbindungsteils 74 stößt.

Mit einer Drehbewegung des Wechselfilters 14 in Schließdrehrichtung wird das filterseitige Verbindungsteil 74 in das kopfseitige Verbindungsteil 20 geschraubt. Dabei gleitet die Außendichtfläche 25 des kopfseitigen Verbindungsteils 20 an einer radial inneren Dichtungsfläche 98 der Außendichtung 90 entlang.

Im Schließzustand der Verbindungseinrichtung 22 liegt die Außendichtung 90 mit ihrer radial inneren Dichtungsfläche 98 nach radial innen dichtend an der Außendichtfläche 25 des kopfseitigen Verbindungsteils 20 an. Die Außendichtung 90 dichtet den Rohölbereich, insbesondere den Einlassringraum 36 und die Einlasskanäle 76, zu einer Umgebung 100 hin ab. Außerdem liegt die Innendichtung 30 nach radial außen dichtend an der Dichtfläche 28 des Anschlussstutzens 26 des Filterkopfs 12 an. Der dem Wechselfilter 14 zugewandte Rand des kopfseitigen Verbindungsteils 20 hält ein axiales Spiel zu der ihm zugewandten Außenseite des Ringscheibenabschnitts 70 des Gehäusedeckels 42 ein.

Beim Betrieb des Filtersystems 10 wird zu reinigendes Motoröl durch den Einlass 16 des Filterkopfs 12 dem Einlassringraum 36 zugeführt. Die Strömung des Motoröls in dem Filtersystem 10 ist insbesondere in Figuren 1, 4, 5 und 6 angedeutet durch gebogene Pfeile 102. Aus dem Einlassringraum 36 gelangt das Motoröl durch die Einlasskanäle 76 in den Ringraum 52 des Wechselfilters 14. Das zu filtrierende Motoröl durchströmt das Filtermedium 44 von radial außen nach radial innen und wird von Partikeln befreit. Im Koaleszenzmedium 55 werden im Motoröl etwa enthaltene kleinste Wassertröpfchen zu großen Wassertropfen vereint. Das Motoröl mit den Wassertropfen strömt durch die Durchtrittsöffnungen in der Umfangswand des Mittelrohrs 54 in den Ausfällspalt 64.

Das Motoröl strömt durch die siebartige hydrophobe Umfangswand des Trennrohrs 58 und gelangt in dessen Innenraum. Das gereinigte Motoröl verlässt den Innenraum des Trennrohrs 58, also auch den Elementinnenraum 50, durch die Auslassöffnung 60 und gelangt in den Innenraum des Anschlussstutzens 26. Von dort aus strömt das filtrierte und von Wasser befreite Motoröl in den Auslass 18 des Filterkopfs 12 und verlässt das Filtersystem 10.

Die Wassertropfen hingegen werden an der radial äußeren Umfangsseite des Trennrohrs 58 zurückgehalten, sinken der Schwerkraft folgend in dem Ausfällspalt 64 nach unten und gelangen durch die Wasserauslassöffnungen 66 in der Gegenendscheibe 48 in den Wassersammelraum 68 des Wechselfilters 14. Von dort kann das abgeschiedene Wasser aus dem Wechselfilter 14 entfernt werden.

## Patentansprüche

1. Wechselfilter (14), insbesondere Spin-On Filter, einer Filtervorrichtung (10) für Fluid, insbesondere Flüssigkeit, **wobei** der Wechselfilter (14) aufweist:
- einen Gehäusetopf (40), in welchem wenigstens ein Filterelement (34) angeordnet ist,
- wenigstens ein stirnseitig des Gehäusetopfs (40) angeordnetes filterseitiges Verbindungsteil (74) einer Verbindungseinrichtung (22) zum lösbaren Verbinden des Wechselfilters (14) mit einem Filterkopf (12) der Filtervorrichtung (10) mittels einer Steck- und/oder Drehbewegung bzgl. einer Verbindungsachse (24) des Wechselfilters (14),
- wenigstens eine stirnseitig des Gehäusetopfs (40) angeordnete Öffnung, insbesondere eine mittige Zentralöffnung (60) und/oder wenigstens eine gegenüber der Zentralöffnung (60) und/ oder gegenüber der Verbindungsachse (24) nach radial außen versetzte Fluidöffnung (78),
- ein mit dem stirnseitigen Rand des Gehäusetopfs (40) mittels einem Formbördel (88) verbundenes Blechumformteil (86) mit wenigstens einer eingeformten, bzgl. der Verbindungsachse (24) umfangsmäßigen, insbesondere koaxialen, in radialer Richtung offenen Dichtungsaufnahmenut (92) zur Aufnahme wenigstens einer Dichtung (90), insbesondere einer Außendichtung,
wobei die wenigstens eine Dichtungsaufnahmenut (92) wenigstens eine Öffnung, ggf. die Zentralöffnung (60) und/oder die wenigstens eine Fluidöffnung (78), bzgl. der Verbindungsachse (24) radial außen umläuft, und wobei in der Dichtungsaufnahmenut (92) wenigstens eine Dichtung (90) angeordnet ist oder werden kann, die wenigstens eine bzgl. der Verbindungsachse (24) radial und/ oder axial gerichtete Dichtungsfläche (98) zur Anlage an wenigstens einer filterkopfseitigen bzgl. der Verbindungsachse (24) radial und/oder axial gerichteten Dichtfläche (25) aufweist, um bei an dem Filterkopf (12) montiertem Wechselfilter (14) wenigstens einen zwischen dem Wechselfilter (14) und Filterkopf (12) gebildeten Fluidraum (36) zur Umgebung (100) hin abzudichten, wobei der Gehäusetopf (40) ein ringförmiges Deckelbauteil (42) zum Abschließen des Gehäusetopfs (40) aufweist, wobei das filterseitige Verbindungsteil (74) einstückig mit einem radial außerhalb des Verbindungsteils (74) angeordneten Ringscheibenabschnitt (70) des Deckelbauteils (42) verbunden ist, **dadurch gekennzeichnet, dass** zwischen dem Ringscheibenabschnitt (70) des Deckelbauteils (42) einerseits und dem Formbördel (88) andererseits wenigstens ein hiervon separates Kraftübertragungselement (96) insbesondere ein Kraftübertragungsring, bzgl. der Verbindungsachse (24) axial kraftübertragend angeordnet ist.

2. Wechselfilter nach Anspruch 1, **dadurch gekennzeichnet, dass** die wenigstens eine Dichtungsaufnahmenut (92) bzgl. der Verbindungsachse (24) nach radial innen offen ist.

3. Wechselfilter nach Anspruch 1 oder 2, **dadurch gekennzeichnet, dass** der Gehäusetopf (40) wenigstens in seinem Randbereich aus Blech ist.

4. Wechselfilter nach einem der vorangehenden Ansprüche, **dadurch gekennzeichnet, dass** das Blechumformteil (86) als insbesondere einteilig hergestellter Blechring ausgebildet ist.

5. Wechselfilter nach einem der vorigen Ansprüche, **dadurch gekennzeichnet, dass** die bzgl. der Verbindungsachse (24) radial offene Seite wenigstens einer Dichtungsaufnahmenut (92) bzgl. der Verbindungsachse (24) radial betrachtet gegenüber einer Verbindungsseite wenigstens eines filterseitigen Verbindungsteils (74), insbesondere eines Gewindes und/oder eines Verbindungselements einer bajonettverschlussartigen Verbindung, welches sich bzgl. der Verbindungsachse (24) auf derselben Seite befindet, angeordnet ist.

6. Wechselfilter nach einem der vorigen Ansprüche, **dadurch gekennzeichnet, dass** bzgl. der Verbindungsachse (24) radial zwischen Blechumformteil (86) und einer Umfangswand des Gehäusetopfs (40) eine Aufnahme (94) für das wenigstens eine Kraftübertragungselement (96) realisiert ist.

7. Wechselfilter nach einem der vorigen Ansprüche, **dadurch gekennzeichnet, dass** das Blechumformteil (86) wenigstens ein Sicherungselement (82) einer Verdrehsicherung (84) aufweist, das mit wenigstens einem Gegensicherungselement (80) der Verdrehsicherung (84) auf Seiten wenigstens eines filterseitigen Verbindungsteils (74), insbesondere eines Deckelbauteils (42), zusammenwirkt, um eine Relativdrehung zwischen dem Blechumformteil (86) und dem wenigstens einen filterseitigen Verbindungsteil (74), insbesondere dem Deckelbauteil (42), zu begrenzen, insbesondere zu verhindern.

8. Wechselfilter nach Anspruch 7, **dadurch gekennzeichnet, dass** das Sicherungselement (82) als Sicherungslasche und das Gegensicherungselement (80) als Sicherungsaufnahme ausgebildet ist.

9. Filtervorrichtung (10) für Fluid, insbesondere Flüssigkeit mit wenigstens einem Wechselfilter (14) nach einem der vorigen Ansprüche und einem Filterkopf (12), mit welchem der Wechselfilter (14) mittels einer Steck-und/oder Drehbewegung bzgl. einer Verbindungsachse (24) des Wechselfilters (14) lösbar verbunden ist.

10. Verwendung eines Wechselfilters nach einem der Ansprüche 1 bis 8 zur Filtration von Öl oder Kraftstoff.

11. Verwendung einer Filtervorrichtung nach Anspruch 9 in einer Brennkraftmaschine, insbesondere einem Kraftfahrzeug.

## Claims

1. Exchangeable filter (14), in particular a spin-on filter, of a filter device (10) for fluid, in particular liquid, **wherein** the exchangeable filter (14) comprises:
- a housing pot (40) in which at least one filter element (34) is arranged,
- at least one filter-side connecting part (74) of a connecting device (22) arranged on the front side of the housing pot (40) for detachably connecting the exchangeable filter (14) to a filter head (12) of the filter device (10) by means of a plug-in and/or rotary movement with respect to a connecting axis (24) of the exchangeable filter (14),
- at least one opening arranged on the end face of the housing pot (40), in particular a central opening (60) and/or at least one fluid opening (78) offset radially outwards with respect to the central opening (60) and/or with respect to the connecting axis (24),
- a sheet metal forming part (86) connected to the end edge of the housing pot (40) by means of a form crimp (88) and having at least one formed-in seal receiving groove (92) which is circumferential with respect to the connecting axis (24), in particular coaxial, open in the radial direction, for receiving at least one seal (90), in particular an outer seal,
wherein the at least one seal-receiving groove (92) circumscribes at least one opening, optionally the central opening (60) and/or the at least one fluid opening (78), radially outwardly with respect to the connecting axis (24), and wherein at least one seal (90) is or can be arranged in the seal-receiving groove (92), which has at least one sealing surface (98) directed radially and/or axially with respect to the connecting axis (24) is or can be used for bearing against at least one sealing surface (98) on the filter head side radially and/or axially with respect to the connecting axis (24), in order to seal off at least one fluid space (36) formed between the exchangeable filter (14) and the filter head (12) from the environment (100) when the exchangeable filter (14) is mounted on the filter head (12), the housing pot (40) having an annular cover component (42) for closing off the housing pot (40), wherein the connecting part (74) on the filter side is integrally connected to an annular disc portion (70) of the cover component (42) arranged radially outside the connecting part (74), **characterized in that** between the annular disc portion (70) of the cover component (42) on the one hand and the form crimp (88) on the other hand at least one force transmission element (96) separate therefrom, in particular a force transmission ring, is arranged in an axially force-transmitting manner with respect to the connecting axis (24).

2. Exchangeable filter according to claim 1, **characterized in that** the at least one seal receiving groove (92) is open radially inwards with respect to the connecting axis (92).

3. Exchangeable filter according to claim 1 or 2, **characterized in that** the housing pot (40) is made of sheet metal at least in its edge region.

4. Exchangeable filter according to one of the preceding claims, **characterized in that** the sheet metal forming part (86) is designed as a sheet metal ring, in particular manufactured in one piece.

5. Exchangeable filter according to one of the previous claims, **characterized in that** the radially open side, with respect to the connecting axis (24), of at least one seal-receiving groove (92) is arranged, with respect to the connecting axis (24), radially opposite to a connecting side of at least one connecting part (74) on the filter side, in particular a thread and/or a connecting element of a bayonet-type connection, which is located on the same side with respect to the connecting axis (24).

6. Exchangeable filter according to one of the previous claims, **characterized in that** with respect to the connecting axis (24), a receptacle (94) for the at least one force transmission element (96) is realized radially between the sheet metal forming part (86) and a circumferential wall of the housing pot (40).

7. Exchangeable filter according to one of the previous claims, **characterized in that** the sheet metal forming part (86) has at least one securing element (82) of an anti-rotation device (84), which cooperates with at least one counter-securing element (80) of the anti-rotation device (84) on the side of at least one filter-side connecting part (74), in particular a cover component (42), in order to limit, in particular to prevent, a relative rotation between the sheet metal forming part (86) and the at least one filter-side connecting part (74), in particular the cover component (42).

8. Exchangeable filter according to claim 7, **characterized in that** the securing element (82) is designed as a securing lug and the counter-securing element (80) is designed as a securing receptacle.

9. Filter device (10) for fluid, in particular liquid, with at least one exchangeable filter (14) according to one of the previous claims and a filter head (12) to which the exchangeable filter (14) is detachably connected by means of a plug-in and/or rotary movement with respect to a connecting axis (24) of the exchangeable filter (14).

10. Use of an exchangeable filter according to one of claims 1 to 8 for the filtration of oil or fuel.

11. Use of a filter device according to claim 9 in an internal combustion engine, in particular a motor vehicle.

## Revendications

1. Filtre à échange rapide, en particulier filtre à visser (14), d'un dispositif de filtration (10) pour fluide, en particulier un liquide, **lequel** filtre à visser (14) comprenant:
- un pot de boîtier (40) dans lequel est disposé au moins un élément filtrant (34),
- au moins une pièce de raccordement (74) d'un dispositif de raccordement (22) disposé sur la face frontale du pot de boîtier (40) pour relier de manière amovible le filtre à visser (14) à une tête de filtre (12) du dispositif de filtre (10) au moyen d'un mouvement d'enfichage et/ou de rotation par rapport à un axe de raccordement (24) du filtre à visser (14),
- au moins une ouverture disposée sur la face frontale du pot de boîtier (40), en particulier une ouverture centrale (60) et/ou au moins une ouverture pour fluide (78) décalée radialement vers l'extérieur par rapport à l'ouverture centrale (60) et/ou par rapport à l'axe de raccordement (24),
- une pièce en tôle (86) reliée au bord frontal du pot de boîtier (40) au moyen d'une bride de formage (88) et présentant au moins une rainure de réception de joint (92) formée dans la périphérie par rapport à l'axe de raccordement (24), en particulier coaxiale, ouverte en direction radiale, pour recevoir au moins un joint (90), en particulier un joint extérieur,
dans lequel la au moins une rainure de réception de joint (92) fait tourner au moins une ouverture, le cas échéant l'ouverture centrale (60) et/ou la au moins une ouverture pour fluide (78), radialement vers l'extérieur par rapport à l'axe de raccordement (24), et dans lequel au moins un joint (90) est ou peut être disposé dans la rainure de réception de joint (92), lequel joint (92) ayant au moins une surface d'étanchéité (98) dirigée radialement et/ou axialement par rapport à l'axe de raccordement (24) pour s'appuyer sur au moins une surface d'étanchéité (25) du côté de la tête de filtre dirigée radialement et/ou axialement par rapport à l'axe de raccordement (24), afin d'isoler de l'environnement (100) au moins un espace de fluide (36) formé entre le filtre à visser (14) et la tête de filtre (12) lorsque le filtre à visser (14) est monté sur la tête de filtre (12), le pot de boîtier (40) présentant un élément de pièce de recouvrement annulaire (42) pour fermer le pot de boîtier (40), la pièce de raccordement (74) côté filtre étant reliée d'un seul tenant à une partie en forme de disque annulaire (70) de la pièce de recouvrement (42) disposée radialement à l'extérieur de la pièce de raccordement (74), **caractérisé en ce qu'**entre la partie en forme de disque annulaire (70) de la pièce de recouvrement (42) d'une part et la bride de formage (88) d'autre part, au moins un élément de transmission de force (96) séparé de celle-ci, en particulier une bague de transmission de force, est disposé de manière à transmettre les forces axialement par rapport à l'axe de raccordement (24).

2. Filtre à visser selon la revendication 1, **caractérisé en ce que** l'au moins une rainure de réception de joint (92) est ouvert radialement vers l'intérieur par rapport à l'axe raccordement (24).

3. Filtre alternatif selon la revendication 1 ou 2, **caractérisé en ce que** le pot du boîtier (40) est en tôle au moins dans sa zone de bord.

4. Filtre alternatif selon l'une des revendications précédentes, **caractérisé en ce que** la pièce en tôle (86) est conçue comme un anneau en tôle, notamment fabriqué en une seule pièce.

5. Filtre à visser selon l'une des revendications précédentes, **caractérisé en ce que** le côté radialement ouvert, par rapport à l'axe de raccordement (24), d'au moins une rainure de réception de joint (92) est disposé, par rapport à l'axe de raccordement (24), radialement en face d'un côté de raccordement d'au moins une pièce de raccordement (74) du côté du filtre, en particulier un filetage et/ou un élément de raccordement d'un raccordement du type baïonnette, qui se trouve du même côté par rapport à l'axe de raccordement (24).

6. Filtre alternatif selon l'une des revendications précédentes, **caractérisé en ce que,** un logement (94) pour le au moins un élément de transmission de force (96) est réalisé radialement par rapport à l'axe de raccordement (24) entre la pièce en tôle (86) et une paroi circonférentielle du pot de boîtier (40).

7. Filtre à visser selon l'une des revendications précédentes, **caractérisé en ce que** la pièce en tôle (86) présente au moins un élément de fixation (82) d'un dispositif anti-rotation (84), qui coopère avec au moins un élément de fixation opposé (80) du dispositif anti-rotation (84) du côté d'au moins une pièce de raccordement (74) côté filtre, en particulier une pièce de recouvrement (42), afin de limiter, en particulier d'empêcher, une rotation relative entre la pièce en tôle (86) et la au moins une pièce de raccordement (74) côté filtre, en particulier la pièce de recouvrement (42).

8. Filtre interchangeable selon la revendication 7, **caractérisé en ce que** l'élément de fixation (82) est conçu comme une patte de fixation et l'élément de contre fixation (80) est conçu comme un réceptacle de fixation.

9. Dispositif de filtration (10) pour fluide, en particulier liquide, avec au moins un filtre à visser (14) selon l'une des revendications précédentes et une tête de filtre (12) à laquelle le filtre à visser (14) est relié de manière amovible par un mouvement d'enfichage et/ou de rotation par rapport à un axe de raccordement (24) du filtre à visser (14).

10. Utilisation d'un filtre à visser selon l'une des revendications 1 à 8 pour la filtration de l'huile ou du carburant.

11. Utilisation d'un dispositif de filtrage selon la revendication 9 dans un moteur à combustion interne, en particulier un véhicule automobile.
